# EUROPEAN PATENT APPLICATION

(11) **EP 2 261 623 A2**
(43) Date of publication of application: **15.12.2010**
(21) Application number: 10005869.2
(22) Date of filing: 08.06.2010
(51) Int. Cl.: G01K 1/14, G01F 23/00

(54) **Housing flange for sensors**

(30) Priority: 11.06.2009 IT GE20090007 U
(71) Applicant: Nuova Rade S.P.A., 16015 Casella (GE) (IT)
(72) Inventor: Covi, Flavio, Emilio, 44100 Ferrara (IT); Repetto, Stefano, 16032 Camogli (IT)
(74) Representative: Sergio, Stefano

(57) **Abstract**

Housing flange for sensors that may be installed on tanks for liquids including a ring portion (2) substantially flat from the upper surface of which there extends a plurality of cylindrical elements (3) or bolts arranged along the circumference of said ring portion, said ring portion being made of plastic material and obtained by co-injection together with the tank.

## Description

This utility model refers to a flange for the positioning of sensors.

Such flanges are usually used in fuel tanks, for instance, fuel tanks for yachts which are normally made of plastic, in order to fix level or temperature sensors of the fuel itself to the tank.

These flanges are made of metallic material and are positioned on the inside of the tank mould during the moulding process through incorporation on the surface of the tank itself.

Therefore, there may be certain inconveniences in that the plastic does not bind easily with the metal and, after the moulding procedure, one may find zones of the flange in which the metal is not perfectly covered by the plastic. These zones can, therefore, become critical points in which one may find a lack of water-tightness and the subsequent leakage of material.

The flange that is the subject of this utility model obviates such inconveniences by its conformation and due to the fact that it is made directly in plastic material in such way that, during the moulding, the plastic material of the tank and that of the flange interact with one another determining a perfect sealing.

The subject of this utility model is a flange for the housing of sensors according to the features of the attached claim 1.

The invention will be described in the following making reference to one of its possible forms that is merely given as an example, illustrated in the attached drawings, where:

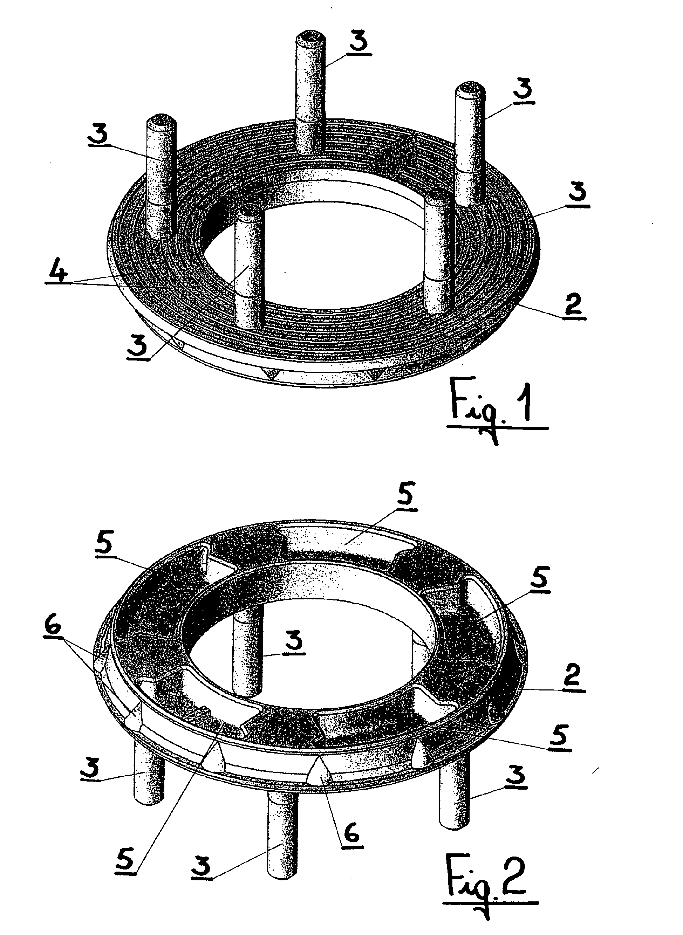

figure 1 shows a perspective view of the upper part of the flange;
figure 2 shows a perspective view of the lower part of the flange;

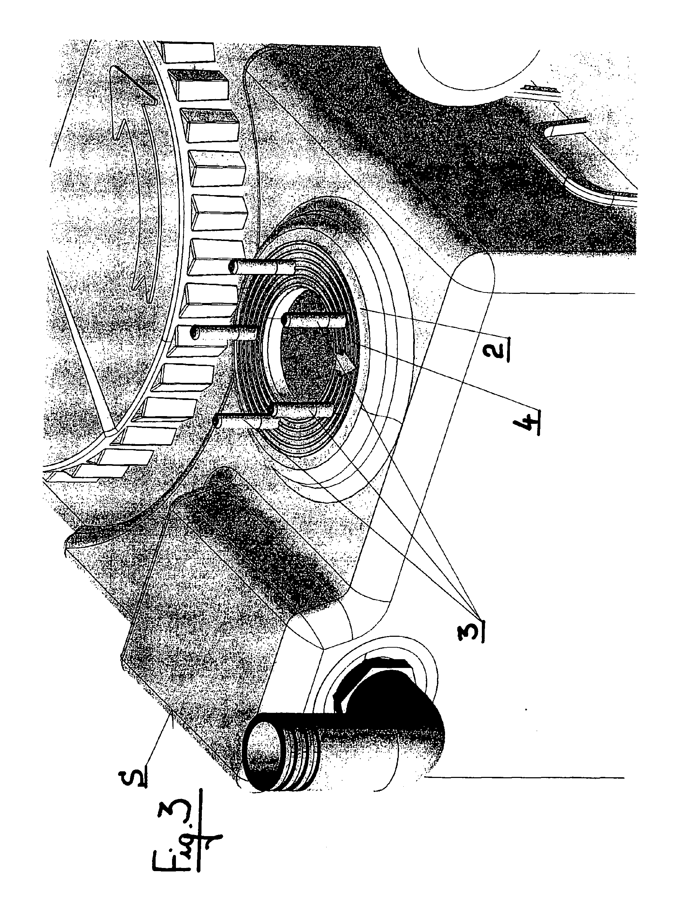

figure 3 schematically shows the flange positioned on a plastic tank.

With reference to these figures, the flange subject of this invention essentially includes a ring portion 2, substantially flat, from the upper surface of which there extends a plurality of cylindrical elements 3 or bolts arranged along the circumference of said ring portion; preferably these cylindrical elements are equidistant from one another. Even more preferably, there should be five of said cylindrical elements arranged into a pentagon. The above mentioned upper surface of the ring portion is rough and this roughness is obtained, for instance, by means of a plurality of circumferential, concentric protuberances 4.

The ring portion is made of plastic material, for instance, of high-density polyethylene (HDPE or PEHD), while the bolts are preferably made of stainless steel.

To ensure the bond between the flange and the plastic tank S during the co-injection phase, a plurality of housings 5 is also envisaged with a substantially quadrangular shape, for instance in the number of five, as well as a plurality of protuberances 6 on the external circumference of the ring portion.

## Claims

1. Housing flange for sensors that may be installed on tanks for liquids **characterised by** the fact of including a ring portion (2) substantially flat from the upper surface of which there extends a plurality of cylindrical elements (3) or bolts arranged along the circumference of said ring portion, said ring portion being made of plastic material and obtained by co-injection together with the tank.

2. Flange according to claim 1, wherein said cylindrical elements are equidistant from one another.

3. Flange according to claim 1, wherein there are five of said cylindrical elements arranged into a pentagon.

4. Flange according to claim 1, wherein the lower surface of the ring portion shows a plurality of housings (5) with a substantially quadrangular shape.

5. Flange according to claim 1, wherein on the external circumference of the ring portion there is a plurality of protuberances (6) envisaged.
